# EUROPEAN PATENT SPECIFICATION

(11) **EP 1 473 856 B1**
(45) Date of publication and mention of the grant of the patent: **13.06.2007**
(21) Application number: 04009300.7
(22) Date of filing: 20.04.2004
(51) Int. Cl.: H04B 10/155, H04B 10/18

(54) **Duobinary optical transmission apparatus**
Duobinäre optische Übertragungvorrichtung
Dispositif de transmission optique duobinaire

(30) Priority: 30.04.2003 KR 2003027639
(43) Date of publication of application: 03.11.2004
(73) Proprietor: SAMSUNG ELECTRONICS CO., LTD., Suwon-si, Gyeonggi-do (KR)
(72) Inventor: Lee, Han-Lim Samsung Electronics Co., Ltd.,, Gyeonggi-do (KR); Kim, Sung-Kee Samsung Electronics Co., Ltd.,, Gyeonggi-do (KR); Oh, Yun-Je Samsung Electronics Co., Ltd.,, Gyeonggi-do (KR); Hwang, Seong-Taek Samsung Electronics Co., Ltd.,, Gyeonggi-do (KR)
(74) Representative: Grünecker, Kinkeldey, Stockmair & Schwanhäusser Anwaltssozietät

(56) References cited:
- EP-A- 0 825 733
- EP-A- 1 416 654
- NAKAZAWA M ET AL: "ULTRAHIGH-SPEED LONG-DISTANCE TDM AND WDM SOLITON TRANSMISSION TECHNOLOGIES" IEEE JOURNAL OF SELECTED TOPICS IN QUANTUM ELECTRONICS, IEEE SERVICE CENTER, US, vol. 6, no. 2, March 2000 (2000-03), pages 363-395, XP000940399 ISSN: 1077-260X

## Description

### BACKGROUND OF THE INVENTION

### 1. Field of the Invention

The present invention relates to a duobinary optical transmission apparatus using a duobinary optical transmission technique with Dense Wavelength Division Multiplexing.

### 2. Description of the Related Art

In general, a DWDM (Dense Wavelength Division Multiplexing) optical transmission system has excellent communication efficiency, since it can transmit an optical signal having multiple channels with different wavelengths through a single optical fiber. Also, the DWDM system can transmit an optical signal regardless of its transmission speed. Accordingly, the DWDM systems are now widely used in ultrahigh speed internet networks, the data traffic of which is on an increasing trend. Recently, systems, each of which can transmit more than a hundred channels through a single optical fiber, are using the DWDM technology.

Furthermore, various research is being actively conducted to develop a system which can transmit more than two hundred channels of 40 Gbps through a single optical fiber simultaneously, thus having a transmission speed of more than 10 Tbps.

However, the enlargement of transmission capacity is restricted due to severe interference and distortion between channels if the channel distance is less than 50GHz when a light intensity is modulated using the conventional non-return-to-zero (NRZ) method, which is due to a rapid increase of data traffic and a request for high-speed transmission of data of more than 40 Gbps. Transmission distance is restricted in high-speed transmission of more than 10 Gbps since a direct current (DC) frequency component of a conventional binary NRZ transmission signal and a high frequency component spread during modulation cause non-linearity and dispersion when the binary NRZ transmission signal propagates in an optical fiber medium.

Recently, optical duobinary technology has been highlighted as an optical transmission technology capable of overcoming the restriction problems associated with transmission distance due to chromatic dispersion. A main advantage of the duobinary transmission is that the transmission spectrum is reduced in comparison to the general binary transmission. In a dispersion restriction system, a transmission distance is in inverse proportion to the square of the transmission spectrum bandwidth. This means that, when the transmission spectrum is reduced by 1/2, the transmission distance increases four times. Furthermore, since a carrier frequency is suppressed in a duobinary transmission spectrum, it is possible to relax the restriction of an optical power output caused by Brillouin scattering excited in the optical fiber.

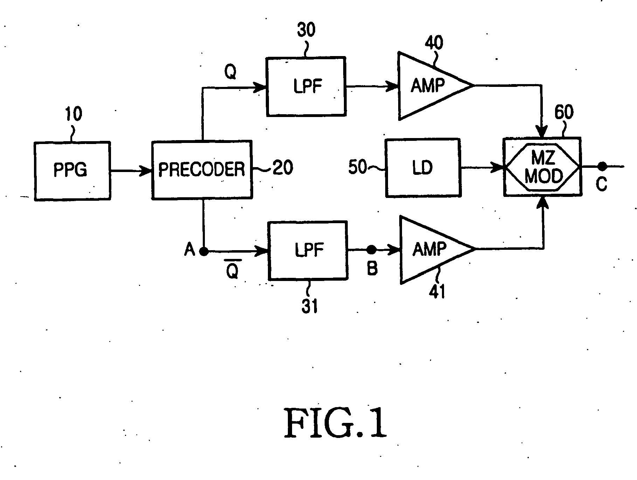

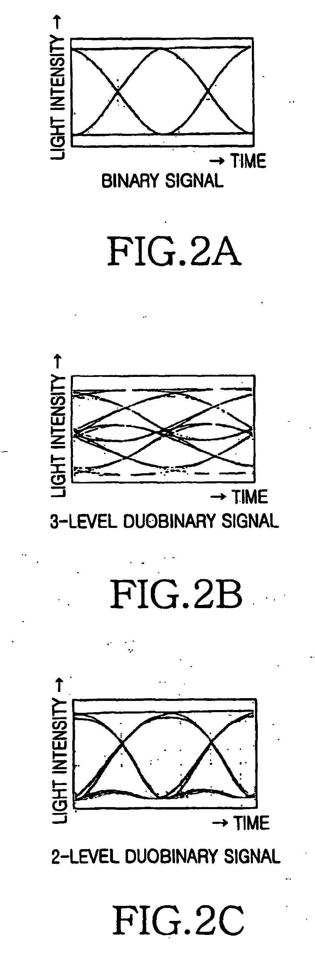

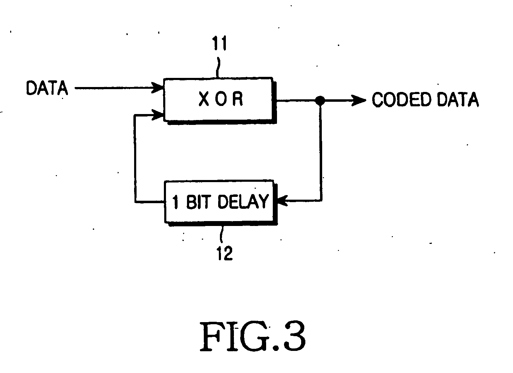

FIG. 1 illustrates an example of a structure of a conventional duobinary optical transmission apparatus, FIGs. 2A to 2C are eye diagrams of an output signal at nodes A, B, and C in FIG. 1, and FIG. 3 illustrates a conventional duobinary precoder.

Referring to FIG. 1, the conventional duobinary optical transmission apparatus includes a pulse pattern generator (PPG) 10, a precoder 20, low pass filters 30 and 31, modulator driving amplifiers 40 and 41, a laser source 50, and a Mach-Zehnder interferometer type optical intensity modulator 60. The pulse pattern generator generates a 2-level electrical pulse signal. The precoder 20 encodes the 2-level NRZ electrical signal. The low pass filters 30 and 31 change 2-level NRZ electrical signals to 3-level electrical signals and reduce the bandwidth of the signals. The modulator driving amplifiers 40 and 41 amplify the 3-level electrical signals to output optical modulator driving signals. The laser source 50 outputs a carrier.

The 2-level pulse signal generated in the pulse pattern generator 10 is encoded in the precoder 20, and the 2-level pulse signal at the node A has an eye diagram as shown in FIG. 2A. The 2-level binary signals outputted from the precoder 20 are inputted to the low pass filters 30 and 31, and each of the low pass filters 30 and 31 has a bandwidth corresponding to about 1/4 of the clock frequency of the 2-level binary signals. This excessive restriction to the bandwidth causes interference between codes, which thus changes the 2-level binary signal to a 3-level duobinary signal. An output eye diagram of the signal at node B is illustrated as shown in FIG. 2B. The 3-level duobinary signals are amplified in the modulator driving amplifiers 40 and 41 and are then utilized as signals for driving the Mach-Zehnder interferometer type optical intensity modulator 60. The phase and light intensity of the carrier outputted from the laser source 50 are modulated by the driving signal of the Mach-Zehnder interferometer type optical intensity modulator 60, so that the modulator 60 outputs a 2-level optical duobinary signal modulated from the carrier. FIG. 2C shows an eye diagram at node C. In FIG. 1, *Q̅* represents an inverter signal of *Q.* The signals *Q* and *Q̅* are inputted to positive and negative electrodes of the Mach-Zehnder interferometer type optical intensity modulator 60 which has a dual electrode structure.

The Mach-Zehnder interferometer type optical intensity modulators as described above can be classified into two types having a Z-cut structure and an X-cut structure. In a Z-cut structured Mach-Zehnder interferometer type optical intensity modulator having dual arms, each arm includes an electrical low pass filter 30 or 31 and a modulator driving amplifier 40 or 41, thereby enabling a 3-level electric signal to be applied to each arm. Although not shown, in an X-cut structured Mach-Zehnder interferometer type optical intensity modulator having a single arm, the single arm includes an electrical low pass filter and a modulator driving amplifier, so that a 3-level electric signal can be applied to the single arm.

FIG. 3 illustrates a structure of a duobinary precoder employed in a conventional duobinary optical transmission apparatus.

As shown in FIG. 3, the conventional precoder has a structure including an exclusive OR (XOR) gate 11 and a time delay unit 12 for delaying an output signal of the XOR gate by 1 data bit.

However, in the case of a high speed data signal, the XOR gate has time delay of at least 1 data bit in itself, thereby causing it difficult to manufacture the conventional duobinary precoder. Further, in generating the 3-level data signal by the electric low pass filter, pseudo random bit sequence (PRBS) has large influence. As there is an increase in the length of pseudo random bit sequence, deterioration of transmission characteristics becomes greater, thereby causing it to be very difficult to realize the system.

A method for generating a duobinary signal disclosed in EP-A-0 825 733 uses optical modulators for modulating individually the intensity and the phase of a carrier wave wherein the phase modulation of the intensity-modulated signal is performed by delaying a signal encoded by a precoder. One embodiment uses a D-Flip-Flop in combination with a counter that counts the pulses of a clock signal instead of the precoder.

EP-A-1 416 654 is a document that due to its later publication date falls within the terms of Article 54(3) and (4) EPC and is therefore only relevant to the question of novelty of the present application. The document discloses a duobinary optical transmission apparatus including a light source outputting an optical carrier, an NRZ optical signal generating section receiving an NRZ electrical signal, modulating the optical carrier into an NRZ optical signal according to the NRZ electrical signal, and a duobinary optical signal generating section receiving the NRZ electrical signal and modulating the NRZ optical signal into a duobinary optical signal, wherein the latter section includes a precoder to encode the NRZ electrical signal.

The document titled 'Ultrahigh-speed long-distance TDM and WDM soliton transmission technologies' by M. Nakazawa et al. (IEEE Journal of selected topics in Quantum Electronics. IEEE Service Center. US, vol. 6. no. 2. March 2000. pp. 363-395) discloses how to generate a dark soliton train by using an 'AND' and T-flip-flop circuits and a push-pull LN intensity modulator from the signal of a pulse pattern generator and its clock data.

### SUMMARY OF THE INVENTION

Accordingly, the present invention overcomes the above-mentioned problems that are inherent in the prior art. The present invention provides a duobinary optical transmission apparatus having transmission characteristics that are unaffected by the pseudo random bit sequences (PRBS).

The present invention also provides a duobinary optical transmission apparatus which has increased immunity against wavelength dispersion, without using an existing feedback-type precoder and an electrical low-pass filter.

In order to accomplish the present invention, there is provided a duobinary optical transmission apparatus comprising: a light source for outputting an optical carrier; a first modulator driving amplifier unit for receiving, amplifying, and then outputting at least one NRZ electrical signal; an optical intensity modulator for modulating the intensity of the optical carrier according to a driving signal inputted from the first modulator driving amplifier unit; a T-flip-flop separating a group of '1' in odd positions or even positions in the sequence from the NRZ electrical signal; a second modulator driving amplifier unit for amplifying and outputting at least one signal outputted from the T-flip-flop; and an optical phase modulator for modulating the phase of the NRZ optical signal according to at least one driving signal transmitted from the second modulator driving-amplifier unit.

It is preferred that each of the optical intensity modulator and the optical phase modulator comprises a Mach-Zehnder interferometer type optical modulator.

More preferably, the Mach-Zehnder interferometer type optical modulator may be a dual-armed Z-cut Mach-Zehnder interferometer type optical modulator or a single-armed X-cut Mach-Zehnder interferometer type optical modulator. In the case where the Mach-Zehnder interferometer type optical modulator is a dual-armed Z-cut Mach-Zehnder interferometer type optical modulator, each of the first and second modulator driving amplifier units includes a pair of modulator driving amplifiers, each of which amplifies the NRZ electrical signal inputted to itself.

Still more preferably, the group of '1' in odd positions in the sequence and the group of '1' in even positions in the sequence, which have been separated from the NRZ electrical signal, respectively, have a phase difference of 'π' with respect to each other.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing a structure of a conventional duobinary optical transmission apparatus;
FIGs. 2A to 2C are eye diagrams of output signals at nodes A, B, and C in FIG. 1;
FIG. 3 illustrates an example of the structure of a duobinary precoder employed in a conventional duobinary optical transmission apparatus;
FIG. 4 is a block diagram showing a construction of a duobinary optical transmission apparatus according to an embodiment of the present invention;
FIG. 5 illustrates forms of signals at nodes O, P, and T in FIG. 4; nad
FIGs. 6A and 6B are eye diagrams of the output signals at nodes O and P in FIG. 4.
Fig. 7 is an overview of a method according to the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein will be omitted when it may obscure the subject matter of the present invention.

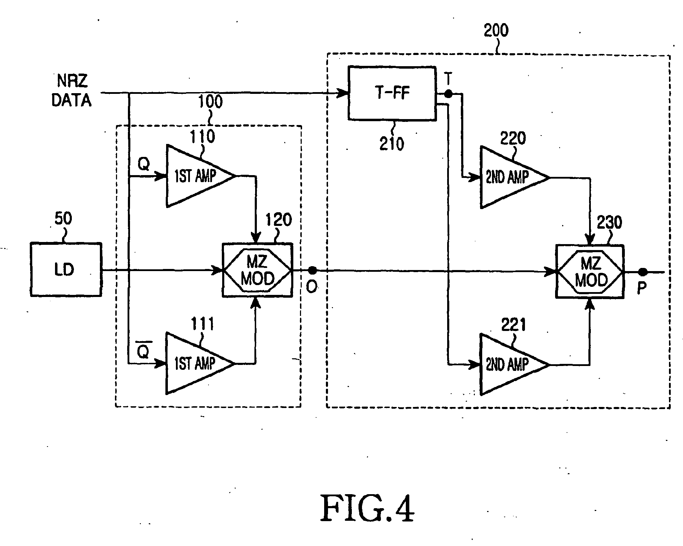

FIG. 4 is a block diagram showing a construction of a duobinary optical transmission apparatus according to an embodiment of the present invention. Although a construction employing a dual armed Z-cut Mach-Zehnder interferometer type optical intensity modulator will be described in the present embodiment, it is to be understood by persons of ordinary skill in the art that a duobinary optical transmission apparatus according to the present invention may employ a single armed Z-cut Mach-Zehnder interferometer type optical intensity modulator. Further, it can be appreciated that each Mach-Zehnder interferometer type optical intensity modulator can modulate not only the intensity but also the phase of light, although the description of the present invention will be given based on that each section of the apparatus has a optical intensity modulator or optical phase modulator, for facilitating the understanding of the function of the modulator.

Referring to FIG. 4, the duobinary optical transmission apparatus according to the present invention includes: a light source LD 50 outputting an optical carrier; an NRZ optical signal generating section 100 receiving an NRZ electrical signal, modulating the optical carrier into an NRZ optical signal according to the NRZ electrical signal, and outputting the NRZ optical signal; and a duobinary optical signal generating section 200 receiving the NRZ electrical signal and modulating the NRZ optical signal into a duobinary optical signal.

The light source generates and outputs the optical carrier. The light source may be realized by a laser diode (LD).

The NRZ optical signal generating section 100 includes: a pair of first modulator driving amplifiers 110 and 111 amplifying and outputting the NRZ electrical signal which has been generated by an apparatus such as a pulse pattern generator (PPG) for generating a 2-level electrical pulse signal; and a Mach-Zehnder interferometer type optical intensity modulator 120 modulating the intensity of the optical carrier according to driving signals inputted from the first modulator driving amplifiers 110 and 111.

The duobinary optical signal generating section 200 includes: a T-flip-flop 210 separating a group of '1' in odd positions (or even positions) in the sequence from the inputted NRZ electrical signal; a pair of second modulator driving amplifiers 220 and 221 amplifying and outputting the signal outputted from the T-flip-flop 210; and a Mach-Zehnder interference type optical phase modulator 230 modulating the phase of the NRZ optical signal according to driving signals inputted from the second modulator driving amplifiers 220 and 221.

Hereinafter, the operation of the duobinary optical transmission apparatus according to the present invention, which has the construction as described above, will be described.

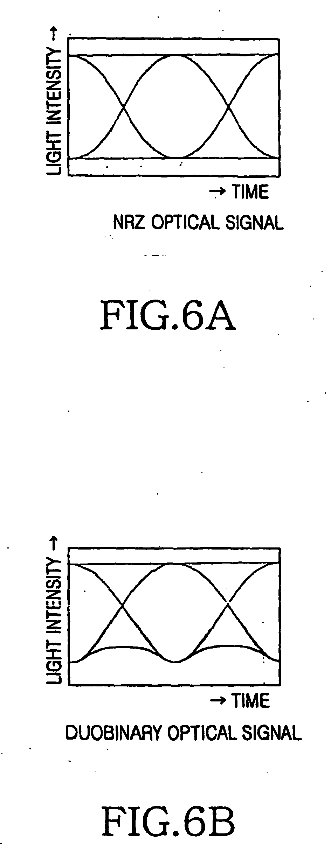

Referring again to FIG. 4, an NRZ electrical signal generated in a pulse pattern generator (PPG) is amplified by a pair of first modulator driving amplifiers 110 and 111 and outputted as driving signals for the modulator 120. According to the modulator driving signals inputted to modulation terminals RF of the optical intensity modulator 120, the optical intensity modulator 120 modulates the light intensity of the carrier outputted from the laser source 50 and outputs the modulated signal to node O. FIG. 6A is an eye diagram at node O of FIG. 4, which means an eye diagram of the output signal of the optical intensity modulator 120, and tells that a general NRZ optical signal is generated by and outputted from the optical intensity modulator 120. The NRZ optical signal generated in this way is inputted to the Mach-Zehnder interference type optical phase modulator in the duobinary optical signal generating section.

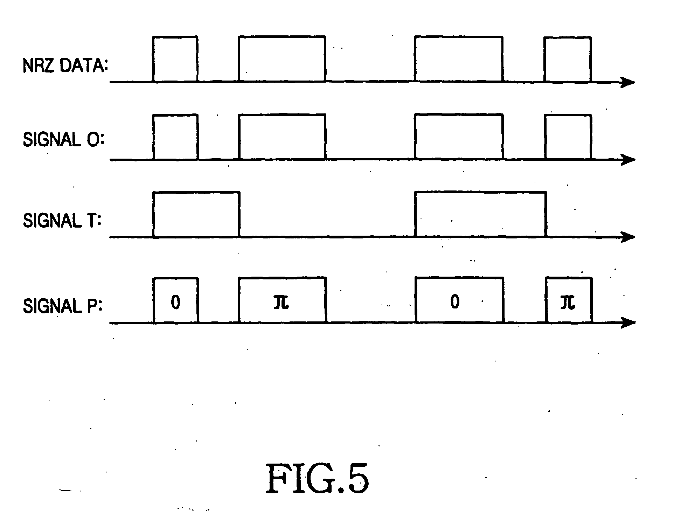

Then, the T-flip-flop 210 in the duobinary optical signal generating section separates a group of '1' in odd positions (or even positions) in the sequence from the inputted NRZ electrical signal (NRZ data in FIG. 5) which has been generated in the pulse pattern generator. The output of the T-flip-flop 210 is shown as signal T in FIG. 5. The output of the T-flip-flop 210 is amplified by the pair of second modulator driving amplifiers 220 and 221 and is then inputted to modulation terminals RF of the Mach-Zehnder interference type optical phase modulator 230. According to modulator driving signals, which are output signals of the second modulator driving amplifiers 220 and 221, the Mach-Zehnder interference type optical phase modulator 230 modulates the phase of the NRZ optical signal inputted from the optical intensity modulator 120 in the NRZ optical signal generating section 100 and outputs the phase-modulated signal to node P. The phase-modulated signal outputted from the optical phase modulator 230 has a waveform as shown by signal P in FIG. 5.

That is, the optical phase modulator 230 enables the group of '1' in odd positions in the sequence and the group of '1' in even positions in the sequence to have phases different from each other. FIG. 6B is an eye diagram at node P of FIG. 4, which means an eye diagram of the output signal of the optical phase modulator 230, and shows that a duobinary optical signal is generated from the optical phase modulator 230.

Through the process described above, a duobinary optical signal can be generated without using an electrical low pass filter. Therefore, not only difficulty in manufacturing a duobinary precoder, which is due to time delay of at least 1 data bit of a high speed data signal in an exclusive OR gate itself, but also signal distortion during the conversion of the 2-level electrical signal to the 3-level electrical signal can be minimized. Further, the duobinary optical signal generated according to the present invention has immunity against dispersion of an optical fiber, which is determined by extinction ratio and chirp of the NRZ signal generated in the optical intensity modulator 120 in the NRZ optical signal generating section 100. Therefore, optimum extinction ratio and chirp are determined in consideration of characteristics of the optical intensity modulator.

As described above, the duobinary optical transmission apparatus according to the present invention has a characteristic of phase intersection without using an existing feedback-type precoder and an electrical low-pass filter, thereby eliminating the influence by pseudo random bit sequence. Further, the duobinary optical transmission apparatus according to the present invention can realize a transmission system having increased immunity against dispersion of an optical fiber, and thus can increase transmission distance and transmission speed of an optical signal.

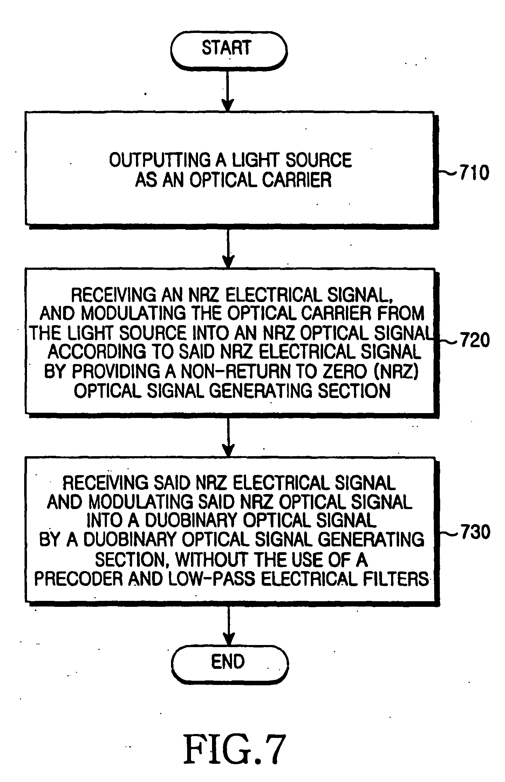

In addition, Fig. 7 shows a overview of a method for duobinary optical transmission comprising the steps of:
(a) outputting a light source as an optical carrier (step 710);
(b) receiving an NRZ electrical signal, and modulating the optical carrier from the light source into an NRZ optical signal according to said NRZ electrical signal by providing a Non - Return to Zero (NRZ) optical signal generating section (step 720); and
(c) receiving said NRZ electrical signal and modulating said NRZ optical signal into a duobinary optical signal by a duobinary optical signal generating section (Step 730)

It should be noted that in conjunction with one possible structure shown in Fig. 4, the NRZ optical signal generating section in step (b) is adapted for receiving the NRZ electrical signal from a pulse pattern generator without using a precoder for encoding and without the NRZ optical signal generator using low pass electrical filters to receive the NRZ electrical signal. As previously discussed, the removal of low pass electrical filter required in the prior art reduces signal distortion during the conversion of the 2-level electrical signal to the 3-level electrical signal to reduce bandwidth, so that a duobinary optical transmission occurs having transmission characteristics that are not affected by a pseudo random bit sequence (PRBS).

While the invention has been shown and described with reference to certain preferred embodiments thereof, it will be understood by those skilled in the art that various changes in form and details may be made therein without departing from the and scope of the invention as defined by the appended claims.

## Claims

1. A duobinary optical transmission apparatus comprising:
a light source (50) for outputting an optical carrier;
a Non-Return to Zero optical signal generating section (100) for receiving a Non-Return to Zero electrical signal, and for modulating the optical carrier from the light source (50) into a Non-Return to Zero optical signal according to said Non-Return to Zero electrical signal; and
a duobinary optical signal generating section (200) for receiving said Non-Return to Zero electrical signal and modulating said Non-Return to Zero optical signal into a duobinary optical signal
**characterized in that**
the duobinary optical generating section (200) comprises:
a T-flip-flop (210) for separating by odd or even positions a group of bits in the inputted Non-Return to Zero electrical signal,
a pair of second modulator driving amplifiers (220, 221) for amplifying and outputting the signal from the T-flip-flop (210), and
a second interference type optical modulator (230) for modulating a phase of said Non-Return to Zero optical signal according to driving signals from said pair of second modulator driving amplifiers (220, 221).

2. The apparatus according to claim 1, wherein the light source (50) comprises a laser diode.

3. The apparatus according to claim 1 or claim 2,
wherein the Non-Return to Zero optical signal generating section (100) comprises a pair of first modulator driving amplifiers (110, 111) for amplifying and outputting the Non-Return to Zero electrical signal, and
a first interferometer type optical modulator (120) for modulating an intensity of said optical carrier according to driving signals inputted from said pair of first modulator driving amplifiers (110, 111).

4. The apparatus according to one of the preceding claims, wherein the Non-Return to Zero optical signal generating section (100) is adapted for receiving the Non-Return to Zero electrical signal from a pulse pattern generator.

5. The apparatus according to claim 4, wherein said apparatus does not require a precoder for encoding the Non-Return to Zero electrical signal received from the pulse pattern generator.

6. The apparatus according to one of the claims 3 to 5, wherein said first and/or second interferometer type optical modulator (120, 230) comprises a Mach-Zehnder interference type optical phase modulator.

7. A duobinary optical transmission apparatus as claimed in claim 6, wherein the Mach-Zehnder interference type optical modulator is a dual-armed Z-cut Mach-Zehnder interferometer type optical modulator.

8. A duobinary optical transmission apparatus as claimed in claim 6, wherein the Mach-Zehnder interference type optical modulator is a single-armed X-cut Mach-Zehnder interferometer type optical modulator.

9. A duobinary optical transmission apparatus as claimed in one of the claims 1 to 8, wherein the T-flip-flop (210) is configured such that the group of '1' in odd positions in the sequence and the group of '1' in even positions in the sequence, which have been separated from the Non-Return to Zero electrical signal, respectively, have a phase difference of 'π' with respect to each other.

10. A method for duobinary optical transmission comprising the steps of:
(a) outputting light from a light source (50) as an optical carrier;
(b) receiving a Non-Return to Zero electrical signal, and modulating the optical carrier from the light source into a Non-Return to Zero optical signal according to said Non-Return to Zero electrical signal by providing a Non-Return to Zero optical signal generating section (100); and
(c) receiving said Non-Return to Zero electrical signal and modulating said Non-Return to Zero optical signal into a duobinary optical signal by a duobinary optical signal generating section (200),
**characterized in that**
step (c) further comprises the steps of:
separating by odd or even positions a group of bits in the inputted Non-Return to Zero electrical signal using a T-flip-flop (210)
amplifying and outputting the signal from the T flip-flop (210) using a pair of second modulator driving amplifiers (220, 221); and
modulating a phase of said Non-Return to Zero optical signal according to driving signals from said pair of second modulator driving amplifiers (220, 221) using a second interference type optical modulator (230).

11. The method according to claim 10, wherein said light source (50) comprises a laser diode.

12. The method according to claim 10 or 11,
wherein said Non-Return to Zero optical signal generating section (100) comprises a pair of first modulator driving amplifiers (110, 111) for amplifying and outputting the Non-Return to Zero electrical signal, and
a first interferometer type optical modulator (120) for modulating an intensity of said optical carrier according to driving signals inputted from said pair of first modulator driving amplifiers (110, 111).

13. The method according to claim 12, wherein said first interferometer type optical modulator (120) comprises a Mach-Zehnder interference type optical phase modulator.

## Patentansprüche

1. Duobinäre optische Sendevorrichtung, die umfasst:
eine Lichtquelle (50) zum Ausgeben eines optischen Trägers;
einen Abschnitt (100) zum Erzeugen eines optischen NRZ (Non-Return to Zero)-Signals, der ein elektrisches NRZ-Signal empfängt und den optischen Träger von der Lichtquelle (50) gemäß dem elektrischen NRZ-Signal zu einem optischen NRZ-Signal moduliert; und
einen Abschnitt (200) zum Erzeugen eines duobinären optischen Signals, der das elektrische NRZ-Signal empfängt und das optische NRZ-Signal zu einem duobinären optischen Signal moduliert,
**dadurch gekennzeichnet, dass**
der Abschnitt (200) zum Erzeugen eines duobinären optischen Signals umfasst:
ein T-Flip-Flop (210), das ungeradzahlige oder geradzahlige Positionen einer Gruppe von Bits in dem eingegebenen elektrischen NRZ-Signal trennt,
ein Paar zweiter Modulator-Ansteuerverstärker (220, 221), die das Signal von dem T-Flip-Flop (210) verstärken und ausgeben, und
einen zweiten Interferenz-Lichtmodulator (230), der eine Phase des optischen NRZ-Signals gemäß Ansteuersignalen von dem Paar zweiter Modulator-Ansteuerverstärker (220, 221) moduliert.

2. Vorrichtung nach Anspruch 1, wobei die Lichtquelle (50) eine Laserdiode umfasst.

3. Vorrichtung nach Anspruch 1 oder Anspruch 2, wobei der Abschnitt (100) zum Erzeugen eines optischen NRZ-Signals ein Paar erster Modulator-Ansteuerverstärker (110, 111), die das elektrische NRZ-Signal verstärken und ausgeben, und
einen ersten Interferometer-Lichtmodulator (120) umfasst, der eine Intensität des optischen Trägers gemäß Ansteuersignalen moduliert, die von dem Paar erster Modulator-Ansteuerverstärker (110, 111) eingegeben werden.

4. Vorrichtung nach einem der vorangehenden Ansprüche, wobei der Abschnitt (100) zum Erzeugen eines optischen NRZ-Signals so eingerichtet ist, das er das elektrische NRZ-Signal von einem Impulsmuster-Generator empfängt.

5. Vorrichtung nach Anspruch 4, wobei die Vorrichtung keinen Vorkodierer zum Kodieren des von dem Impulsmuster-Generator empfangenen elektrischen NRZ-Signals erfordert.

6. Vorrichtung nach einem der Ansprüche 3 bis 5, wobei der erste und/oder der zweite Interferometer-Lichtmodulator (120, 230) einen Mach-Zehnder-Interferenz-Licht-Phasenmodulator umfasst.

7. Duobinäre optische Sendevorrichtung nach Anspruch 6, wobei der Mach-Zehnder-Interferenz-Lichtmodulator ein zweiarmiger Mach-Zehnder-Interferometer-Lichtmodulator mit Z-Schnitt ist.

8. Duobinäre optische Sendevorrichtung nach Anspruch 6, wobei der Mach-Zehnder-Interferenz-Lichtmodulator ein einarmiger Mach-Zehnder-Interferometer-Lichtmodulator mit X-Schnitt ist.

9. Duobinäre optische Sendevorrichtung nach einem der Ansprüche 1 bis 8, wobei das T-Flip-Flop (210) so konfiguriert ist, dass die Gruppe von "1" an ungeradzahligen Positionen in der Sequenz und die Gruppe von "1" an geradzahligen Positionen in der Sequenz, die jeweils aus dem elektrischen NRZ-Signal getrennt worden sind, eine Phasendifferenz von "π" zueinander haben.

10. Verfahren zum duobinären optischen Senden, das die folgenden Schritte umfasst:
(a) Ausgeben von Licht von einer Lichtquelle (50) als einen optischen Träger;
(b) Empfangen eines elektrischen NRZ-Signals und Modulieren des optischen Trägers von der Lichtquelle zu einem optischen NRZ-Signal gemäß dem elektrischen NRZ-Signal durch Bereitstellen eines Abschnitts (100) zum Erzeugen eines optischen NRZ-Signals; und
(c) Empfangen des elektrischen NRZ-Signals und Modulieren des optischen NRZ-Signals zu einem duobinären optischen Signal mit einem Abschnitt (200) zum Erzeugen eines duobinären optischen Signals,
**dadurch gekennzeichnet, dass**
Schritt (c) des Weiteren die folgenden Schritte umfasst:
Trennen einer Gruppe von Bits in dem eingegebenen elektrischen NRZ-Signal nach ungeradzahligen oder geradzahligen Positionen unter Verwendung eines T-Flip-Flops (210),
Verstärken und Ausgeben des Signals von dem T-Flip-Flop (210) unter Verwendung eines Paars zweiter Modulator-Ansteuerverstärker (220, 221); und
Modulieren einer Phase des optischen NRZ-Signals gemäß Ansteuersignalen von dem Paar zweiter Modulator-Ansteuerverstärker (220, 221) unter Verwendung eines zweiten Interferenz-Lichtmodulators (230).

11. Verfahren nach Anspruch 10, wobei die Lichtquelle (50) eine Laserdiode umfasst.

12. Verfahren nach Anspruch 10 oder 11, wobei der Abschnitt (100) zum Erzeugen des optischen NRZ-Signals ein Paar erster Modulator-Ansteuerverstärker (110, 111) zum Verstärken und Ausgeben des elektrischen NRZ-Signals, und
einen ersten Interferometer-Lichtmodulator (120) umfasst, der eine Intensität des optischen Trägers gemäß Ansteuersignalen moduliert, die von dem Paar erster Modulator-Ansteuerverstärker (110, 111) eingegeben werden.

13. Verfahren nach Anspruch 12, wobei der erste Interferometer-Lichtmodulator (120) einen Mach-Zehnder-Interferenz-Licht-Phasenmodulator umfasst.

## Revendications

1. Appareil de transmission optique duobinaire comprenant :
une source de lumière (50) pour délivrer une porteuse optique ;
une section de génération de signal optique de non-retour à zéro (100) pour recevoir un signal électrique de non-retour à zéro et pour moduler la porteuse optique provenant de la source de lumière (50) en un signal optique de non-retour à zéro conformément audit signal électrique de non-retour à zéro ; et
une section de génération de signal optique duobinaire (200) pour recevoir ledit signal électrique de non-retour à zéro et pour moduler ledit signal optique de non-retour à zéro en un signal optique duobinaire,
**caractérisé en ce que**
la section de génération optique duobinaire (200) comprend :
une bascule T (210) pour séparer en positions impaires ou paires un groupe de bits dans le signal électrique de non-retour à zéro entré,
une paire de deuxièmes amplificateurs d'attaque de modulateur (220, 221) pour amplifier et délivrer le signal provenant de la bascule T (210), et
un deuxième modulateur optique de type interférence (230) pour moduler une phase dudit signal optique de non-retour à zéro conformément aux signaux d'attaque provenant de ladite paire de deuxièmes amplificateurs d'attaque de modulateur (220, 221).

2. Appareil selon la revendication 1, dans lequel la source de lumière (50) comprend une diode laser.

3. Appareil selon la revendication 1 ou la revendication 2, dans lequel la section de génération de signal optique de non-retour à zéro (100) comprend :
une paire de premiers amplificateurs d'attaque de modulateur (110, 111) pour amplifier et délivrer le signal électrique de non-retour à zéro, et
un premier modulateur optique de type interféromètre (120) pour moduler une intensité de ladite porteuse optique conformément aux signaux d'attaque entrés à partir de ladite paire de premiers amplificateurs d'attaque de modulateur (110, 111).

4. Appareil selon l'une quelconque des revendications précédentes, dans lequel la section de génération de signal optique de non-retour à zéro (100) est adaptée pour recevoir le signal électrique de non-retour à zéro provenant d'un générateur de séquence d'impulsions.

5. Appareil selon la revendication 4, dans lequel ledit appareil n'exige pas de précodeur pour coder le signal électrique de non-retour à zéro reçu du générateur de séquence d'impulsions.

6. Appareil selon l'une des revendications 3 à 5, dans lequel ledit premier et/ou deuxième modulateur optique de type interféromètre (120, 230) comprend un modulateur de phase optique de type interférence Mach-Zehnder.

7. Appareil de transmission optique duobinaire selon la revendication 6, dans lequel le modulateur optique de type interférence Mach-Zehnder est un modulateur-optique de type interféromètre Mach-Zehnder en coupe Z à deux bras.

8. Appareil de transmission optique duobinaire selon la revendication 6, dans lequel le modulateur optique de type interférence Mach-Zehnder est un modulateur optique de type interféromètre Mach-Zehnder en coupe X à un bras.

9. Appareil de transmission optique duobinaire selon l'une des revendications 1 à 8, dans lequel la bascule T (210) est configurée de sorte que le groupe de "1" en positions impaires dans la séquence et le groupe de "1" en positions paires dans la séquence, qui ont été séparés à partir du signal électrique de non-retour à zéro, ont respectivement une différence de phase de 'n' l'un par rapport à l'autre.

10. Procédé pour la transmission optique duobinaire comprenant les étapes qui consistent à :
(a) délivrer une lumière à partir d'une source de lumière (50) en tant que porteuse optique ;
(b) recevoir un signal électrique de non-retour à zéro et moduler la porteuse optique provenant de la source de lumière en un signal optique de non-retour à zéro conformément audit signal électrique de non-retour à zéro en prévoyant une section de génération de signal optique de non-retour à zéro (100) ; et
(c) recevoir ledit signal électrique de non-retour à zéro et moduler ledit signal optique de non-retour à zéro en un signal optique duobinaire par une section de génération de signal optique duobinaire (200),
**caractérisé en ce que**
l'étape (c) comprend de plus les étapes qui consistent à :
séparer en positions impaires ou paires un groupe de bits dans le signal électrique de non-retour à zéro entré en utilisant une bascule T (210),
amplifier et délivrer le signal provenant de la bascule T (210) en utilisant une paire de deuxièmes amplificateurs d'attaque de modulateur (220, 221), et
moduler une phase dudit signal optique de non-retour à zéro conformément aux signaux d'attaque provenant de ladite paire de deuxièmes amplificateurs d'attaque de modulateur (220, 221) en utilisant un deuxième modulateur optique de type interférence (230).

11. Procédé selon la revendication 10, dans lequel ladite source de lumière (50) comprend une diode laser.

12. Procédé selon la revendication 10 ou 11, dans lequel ladite section de génération de signal optique de non-retour à zéro (100) comprend :
une paire de premiers amplificateurs d'attaque de modulateur (110, 111) pour amplifier et délivrer le signal électrique de non-retour à zéro, et
un premier modulateur optique de type interférence (120) pour moduler une intensité de ladite porteuse optique conformément aux signaux d'attaque entrés à partir de ladite paire de premiers amplificateurs d'attaque de modulateur (110, 111).

13. Procédé selon la revendication 12, dans lequel ledit premier modulateur optique de type interférence (120) comprend un modulateur de phase optique de type interférence Mach-Zehnder.
